# EUROPÄISCHE PATENTSCHRIFT

(11) **EP 0 712 669 B1**
(45) Veröffentlichungstag und Bekanntmachung des Hinweises auf die Patenterteilung: **21.06.2000**
(21) Anmeldenummer: 95117447.3
(22) Anmeldetag: 06.11.1995
(51) Int. Cl.: B05B 7/14, B05B 12/08, G01N 21/15

(54) **Messvorrichtung zum Ermitteln eines Pulveranteils**
Measuring apparatus to determine a powder fraction
Appareil de mesure pour déterminer la teneur de poudre

(30) Priorität: 11.11.1994 DE 4440417
(43) Veröffentlichungstag der Anmeldung: 22.05.1996
(73) Patentinhaber: Bayerische Motoren Werke Aktiengesellschaft, 80788 München (DE); ITW Gema AG, 9015 St. Gallen (CH)
(72) Erfinder: Domnick, Joachim, Dr., D-91093 Hessdorf (DE); Wächter, Peter, D-90427 Nürnberg (DE)
(74) Vertreter: Bücken, Helmut

(56) Entgegenhaltungen:
- EP-A- 0 297 309
- DE-A- 4 133 452
- US-A- 3 921 576
- US-A- 4 289 278
- MILLS E ET AL 'Particle flow instrumentation' , APPLICATIONS OF TRANSPUTERS 2. PROCEEDINGS OF THE SECOND INTERNATIONAL CONFERENCE ON APPLICATIONS OF TRANSPUTERS, SOUTHAMPTON, UK, 11-13 JULY 1990 , 1990, AMSTERDAM, NETHERLANDS, IOS, NETHERLANDS, PAGE(S) 56 - 62 * Seite 56 * * Seite 62 *
- PATENT ABSTRACTS OF JAPAN vol. 004 no. 098 (C-018) ,15.Juli 1980 & JP-A-55 059858 (KANSAI PAINT CO LTD) 6.Mai 1980,

## Beschreibung

Die Erfindung bezieht sich auf eine Vorrichtung der im Oberbegriff des ersten Anspruchs angegebenen Art.

Aus der EP-B 0 297 309 ist eine gattungsgemäße Meßvorrichtung bekannt. Sie dient in Pulverlackierungsanlagen dazu, den Pulveranteil in einem Gas-Pulver-Strom und damit den Lackmassenstrom zu bestimmen, der auf das beschichtende Objekt aufgetragen werden soll.

Bei der bekannten Vorrichtung hat sich jedoch herausgestellt, daß nicht ausgeschlossen werden kann, daß sich Ablagerungen während der Einsatzzeit auf der Gehäuseinnenwand bzw. auf dem Lichtleiter bilden, so daß die Meßergebnisse verfälscht werden.

Aufgabe der vorliegenden Erfindung ist es deshalb, hier Abhilfe zu schaffen und die eingangs genannte Vorrichtung derart auszubilden, daß auch bei längerer Betriebszeit mit Sicherheit Ablagerungen im Strahlengang verhindert werden.

Diese Aufgabe wird erfindungsgemäß durch die kennzeichnenden Merkmale des 1. Anspruchs gelöst. Aufgrund des Einsatzes und des den Einsatz ummantelnden reinen Gasstromes werden Ablagerungen, die die Funktionsfähigkeit der Meßvorrichtung beeinträchtigen, an Gehäusewänden im Bereich des Strahlenganges sicher vermieden. Auch wird dadurch vermieden, daß Pulver aus dem Gas-Pulver-Strom durch die Durchtrittsöffnungen in den Spalt zwischen Gehäuse und Einsatz eintritt und so die Durchtrittsöffnungen verkleinert. Somit lassen sich auch nach längerer Einsatzzeit zuverlässige Meßergebnisse erzielen.

Aus der DE-A 41 33 452 bzw. aus der DE-C 41 32 926 ist es bei Abgasmeßgeräten bekannt, die Partikeldichte im Abgasstrom mit Hilfe von Lichtleitern zu messen. Um hierbei die Lichtleiter gegen Verschmutzung zu schützen, wird im Bereich der Lichtleitern ein Ringspalt geschaffen, in den Spülluft eingeleitet wird. Diese Spülluft mischt sich dann stromab der Lichtleiter mit dem Abgasstrom.

Diese Anordnung, die auf den ersten Blick Parallelen zu der erfindungsgemäßen Anordnung aufweist, kann jedoch keine Hinweise zur Lösung der vorliegenden Aufgabe liefern, da bei diesen bekannten Meßanordnungen die Konzentration von Partikeln und Gas stromab der Meßeinrichtung uninteressant ist.

Im Gegensatz hierzu wird die Spülluft gemäß der Erfindung dem Gas-Pulver-Strom zugemischt und anschließend der Spritzpistole bzw. der Lackauftragsvorrichtung zugeführt. Somit darf die Pulverteilung im Gasstrom nicht beeinflußt werden, da sonst das Lackierbild beeinträchtigt werden kann. Auch muß bei Pulverlackierungsanlagen darauf geachtet werden, daß das Pulver homogen im Gasstrom verteilt ist und nicht Massenansammlungen sich mit Bereichen geringerer Massenkonzentration abwechseln, da sich dies auf die Lackierung negativ auswirken kann.

Die Ansprüche 2 bis 6 beschreiben vorteilhafte Ausführungsformen der Erfindung. Die Fixierung des Einsatzes zu dem Glasrohr über Stützstellen, die möglichst schmal und strömungsgünstig ausgebildet sind, beeinflussen zwar die Strömung im Ringspalt wesentlich. Jedoch ist diese Beeinflussung nur partiell. Deshalb wird der Strahlendurchtrittsbereich in einer größeren Entfernung von dem freien Ende des Einsatzes angeordnet.

Die Weiterbildung der Erfindung nach Anspruch 7 löst das Problem der verringerten Empfangsintensität aufgrund einer nicht ganz auszuschließenden schleichenden Verschmutzung der Meßvorrichtung im Bereich des Strahlenganges, die die Meßergebnisse verfälschen. Bei Verwendung von Laserstrahlen läßt sich dies leicht durch Ändern der Laserleistung erreichen.

Aus der Literaturstelle "Particle flow instrumentation"; Mills E et al; Applications of Transputers 2. Proceedings of the Second International Conference on Applications of Transputers, Southampton, UK, 11 - 13 July 1990; Amsterdam, Netherlands, IOS, Netherlands; pages 52 - 56, ist es bekannt, Geschwindigkeiten in Gaspulverströme optisch, elektrostatisch oder kapazitiv zu messen.

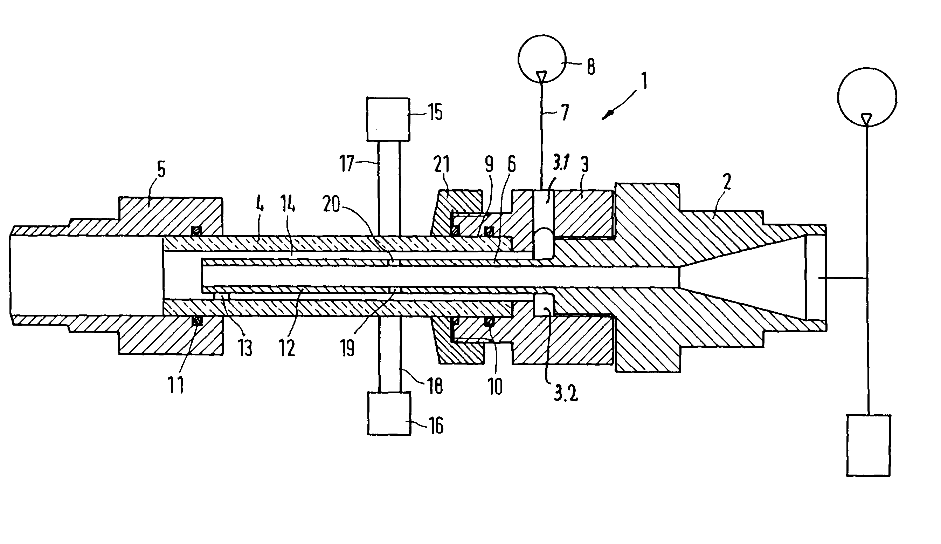

Im folgenden wird die Erfindung anhand eines bevorzugten Ausführungbeispiels näher erläutert. In der einzigen Abbildung ist ein schematisierter Querschnitt durch die Meßvorrichtung dargestellt. Sie ist derart aufgebaut, daß sie sich in das Pulverlackfördersystem problemlos einbauen läßt.

Ganz allgemein besteht die Meßvorrichtung 1 aus dem Grundkörper 2 mit dem Einsatz 6, der Glasrohrfixierung 3, dem Glasrohr 4 sowie der Glasrohraufnahme 5.

Eine nicht näher dargestellte Förderleitung für den Gas-Pulver-Strom wird unterbrochen, damit die Meßvorrichtung 1 zwischengeschaltet werden kann. Hierzu wird das eine Leitungsende auf den Grundkörper 2 aufgesteckt und mittels einer Überwurfmutter oder Schlauchschelle gesichert.

Der Grundkörper 2 weist eine sich in Strömungsrichtung verjüngende Bohrung 2.1 auf, die zur Führung des Gas-Pulver-Stromes dient. Er trägt an seinem anderen Ende die Glasrohrfixierung 3, die als Überwurfmutter ausgebildet ist und auf den Grundkörper 2 aufgeschraubt wird. In der Glasrohrfixierung 3 sind auf dem Umfang verteilt zwei radial angeordnete Bohrungen 3.1 vorgesehen, an die eine Gasleitung 7 angeschlossen ist, die von einer geeigneten Gasquelle 8 kommt. Die Bohrungen 3.1 münden in eine Druckausgleichskammer 3.2, in der eine Vergleichmäßigung der Strömung stattfindet.

Weiterhin weist die Glasrohrfixierung 3 eine Aufnahmebohrung 9 auf, die zur Aufnahme des Glasrohres 4 dient. Zur Abdichtung ist eine Dichtung 10 in Form eines O-Ringes vorgesehen. Gegen unbeabsichtigtes Lösen des Glasrohres 4 aus der Aufnahmebohrung 9 dient die Quetschverschraubung 21, die einen O-Ring gegen eine Abschrägung in der Glasrohrfixierung 3 drückt.

Das freie Ende des Glasrohres 4 ist in der Glasrohraufnahme 5 eingesteckt und wird auch hier wiederum über eine Dichtung 11 abgedichtet. An dem freien Ende der Glasrohraufnahme 5 schließt sich die aufgetrennte Förderleitung wieder an.

Der Einsatz 6 schließt sich als Verlängerung der Bohrung 2.1 an den Grundkörper an. Er ragt in das Glasrohr 4 hinein und ist auf der einen Seite an dem Grundkörper 2 befestigt bzw. einstückig mit ihm ausgebildet. Der Außendurchmesser des Einsatzes 6 ist kleiner gewählt als der Innendurchmesser des Glasrohres 4, so daß zwischen beiden ein Ringspalt 14 gebildet wird. Deshalb stützt sich das andere freie Ende des Einsatzes über drei auf dem Umfang verteilte Stützelemente 13 an der Innenseite des Glasrohres 4 ab. Die Stützelemente 13 sind strömungsgünstig und möglichst schmal ausgebildet. Der Ringspalt hat eine Weite von ca. 1/50 des Innendurchmessers des Glasrohres. Er verläuft auch innerhalb der Glasrohrfixierung und reicht bis zu der Druckausgleichskammer 3.2, so daß das aus der Druckluftquelle 8 gelieferte Gas über die Gasleitung 7, die Bohrungen 3.1 und die Druckausgleichskammer 3.2 in den Ringspalt 14 strömen kann.

Wichtig ist, daß der Strahlendurchtrittsbereich nicht an das freie Ende 12 des Einsatzes 6 verlegt wird, da aufgrund der Stützstellen eine Störung in der Ringspaltströmung eintritt. Andererseits kann auf die Stützelemente nicht verzichtet werden, da sonst keine gleichmäßige Strömung in dem Ringspalt aufgebaut werden kann. Der Ringspalt 14 darf auch nicht beliebig groß gewählt werden, da sonst ein zu großer Luftstrom durch den Ringspalt 14 dem Gas-Pulver-Strom zugemischt wird, wodurch dessen Geschwindigkeit sinken würde, was Pulverablagerungen im Fördersystem zur Folge hätte.

Am freien Ende des Glasrohres 4 erweitert sich der Strömungsquerschnitt für den Gas-Pulver-Strom auf den Wert innerhalb des Fördersystems vor der Meßeinrichtung 1. Gleichzeitig wird an dieser Stelle das Gas aus dem Ringspalt 14 dem Gas-Pulver-Strom beigemischt.

Als Strahlenmeßeinrichtung dient ein Strahlensender 15 und Strahlenempfänger 16, die über Lichtleiter 17 und 18 mit der Außenseite des Glasrohres 4 verbunden sind. An dieser Stelle ist der Einsatz 6 mit Durchtrittsöffnungen 19, 20 versehen, damit der Strahlengang vom Strahlensensor zum Strahlenempfänger nicht unterbrochen wird.

Die beschriebene Meßvorrichtung 1 ist bevorzugt in einem Gehäuse eingebaut. Auf jeden Fall ist dafür Sorge getragen, daß zwischen der Glasrohraufnahme und dem Grundkörper bzw. der Glasrohrfixierung eine kraftübertragende Verbindung vorgesehen ist, damit diese nicht über das Glasrohr 4 erfolgt, was im Betrieb der Meßvorrichtung zu seiner Zerstörung führen könnte.

Das Prinzip der Meßvorrichtung sowie der Strahlenmeßeinrichtung und der Erzeugung eines Gas-Pulver-Stromes sind in der EP-B 0 297 309 ausführlich beschrieben, worauf hier ausdrücklich Bezug genommen wird. Eine Wiederholung der Beschreibung erübrigt sich deshalb.

Im Unterschied zu der bekannten Meßvorrichtung wird bei der erfindungsgemäßen Meßvorrichtung 1 durch das Vorsehen des Ringspaltes 14 verhindert, daß im Bereich des Strahlenganges Festkörper aus dem Gas-Pulver-Strom, der in dem Einsatz 6 strömt, absetzen und so zu Verfälschungen des Meßergebnisses führen. Somit kann die Schwächung der Strahlen alleine durch das in dem Gas-Pulver-Strom enthaltene Pulver erfolgen und damit in Abhängigkeit von diesem Meßergebnis ein Signal entsprechend dem Pulveranteil und damit dem Dichtewert erzeugt werden.

Eine schleichende Verschmutzung im Strahlendurchtrittsbereich wird durch eine Erhöhung der Strahlenleitung ausgeglichen. Hierzu wird bei ausgeschaltetem Partikelstrom die Empfangsintensität gemessen und auf ein konstantes Niveau nachgeregelt. Beim Einsatz des Meßgerätes in Pulverbeschichtungsanlagen für Kraftfahrzeugkarossen kann dies immer zwischen zwei Karossen geschehen, da nach dem Lackieren einer Karosse eine Pause eintritt, bis die nächste Karosse in Lackierposition ist und lackiert werden kann.

## Patentansprüche

1. Meßvorrichtung zum Ermitteln eines Pulveranteils in einem Gas-Pulver-Strom in Pulverlackierungsanlagen, bestehend aus einem zumindest auf Teilstrecken lichtdurchlässigen Gehäuse, in dem ein Einsatz zum Führen des Gas-Pulver-Stromes vorgesehen ist, einem Strahlensender und einem Strahlenempfänger, dessen Strahlen das lichtdurchlässige Gehäuse sowie den Gas-Pulver-Strom durchqueren, wozu der Einsatz im Bereich des Strahlenganges Durchtrittsöffnungen aufweist, und einer stromauf des Strahlenganges angeordneten Gaszufuhrleitung zum Zuführen eines reinen Gasstromes zwischen dem Einsatz und dem Gehäuse,
dadurch gekennzeichnet, daß der Abstand zwischen dem Einsatz (6) und der Gehäuseinnenseite ca. 1/50 des Innenquerschnittes des lichtdurchlässigen Gehäuses beträgt.

2. Meßvorrichtung nach Anspruch 1,
dadurch gekennzeichnet, daß das lichtdurchlässige Gehäuse ein Glasrohr (4) ist.

3. Meßvorrichtung nach Anspruch 2,
dadurch gekennzeichnet, daß das Glasrohr (4) mit Hilfe einer Steckverbindung auswechselbar gehalten ist.

4. Meßvorrichtung nach Anspruch 1,
dadurch gekennzeichnet, daß der Einsatz (6) als Rohr ausgebildet ist.

5. Meßvorrichtung nach einem der vorangegangenen Ansprüche,
dadurch gekennzeichnet, daß der Einsatz (6) fliegend gelagert ist und an seinem freien Ende auf seinem Umfang verteilte Stützelemente (13) aufweist.

6. Meßvorrichtung nach Anspruch 4,
dadurch gekennzeichnet, daß die Stützelemente (13) als in Strömungsrichtung schmal ausgebildete Distanzstücke aufgebaut sind.

7. Verfahren zum Erkennen der schleichenden Verschmutzung einer Meßvorrichtung nach einem der vorangegangenen Ansprüche, bei dem bei ausgeschaltetem Pulvermassenstrom die Empfangsintensität der Strahlen im Strahlenempfänger ermittelt und auf einen konstanten Wert eingestellt wird.

## Claims

1. A measuring device for determining the powder content in a flow of gas and powder in powder coating installations, the device comprising a casing permeable to light at least in parts and containing an insert for conveying the gas-powder flow, a radiation transmitter and a radiation receiver wherein the rays travel through the light-transmitting casing and the gas-powder flow, the insert having passage openings in the path of rays, the device also comprising a gas pipe disposed upstream of the path of rays for supplying a flow of pure gas between the insert and the casing, characterised in that the distance between the insert (6) and the inside of the casing is about 1/50th of the inner cross-section of the light-transmitting casing.

2. A measuring device according to claim 1, characterised in that the light-transmitting casing is a glass tube (4).

3. A measuring device according to claim 2, characterised in that the glass tube (4) is interchangeably secured by a plug-in connection.

4. A measuring device according to claim 1, characterised in that the insert (6) is a tube.

5. A measuring device according to any of the preceding claims, characterised in that the insert (6) is mounted in overhung manner and has peripherally distributed support elements (13) at its free end.

6. A measuring device according to claim 4, characterised in that the support elements (13) are constructed in the form of spacer members which are narrow in the direction of flow.

7. A method of detecting gradual soiling of a measuring device according to any of the preceding claims, wherein the intensity of radiation received in the receiver is measured and adjusted to a constant value after switching off the mass flow of powder.

## Revendications

1. Dispositif de mesure pour déterminer une teneur en poudre d'une veine de gaz-poudre dans des installations de peinture à poudre, comprenant
• un boîtier au moins transparent à la lumière sur une partie de chemin, et recevant un insert pour guider la veine de gaz-poudre,
• un émetteur de rayons et un récepteur de rayons dont les rayons traversent le boîtier transparent et la veine de gaz-poutre, l'insert comportant des orifices de passage dans la zone du chemin des rayons et une conduite d'alimentation de gaz en amont du chemin des rayons pour guider un flux de gaz pur entre l'insert et le boîtier,
caractérisé en ce que
la distance entre l'insert (6) et le côté intérieur du boîtier représente environ 1/50ème de la section intérieure du boîtier transparent.

2. Dispositif selon la revendication 1,
caractérisé en ce que
le boîtier transparent est un tube en verre (4).

3. Dispositif selon la revendication 2,
caractérisé en ce que
le tube en verre (4) est tenu de manière interchangeable à l'aide d'une liaison enfichée.

4. Dispositif selon la revendication 1,
caractérisé en ce que
l'insert (6) est en forme de tube.

5. Dispositif selon l'une quelconque des revendications précédentes,
caractérisé en ce que
l'insert (6) est flottant et comporte à son extrémité libre, des éléments d'appui (13) répartis à sa périphérie.

6. Dispositif selon la revendication 4,
caractérisé en ce que
les éléments d'appui (13) sont des pièces d'écartement étroites formées dans la direction d'écoulement.

7. Procédé de détection d'un encrassage lent d'une installation de mesure selon l'une des revendications précédentes selon lequel, lorsque le flux de la masse de poudre est coupé, l'intensité de réception des rayons dans le récepteur de rayons se termine et se règle sur une valeur constante.
